Europäisches Patentamt

European Patent Office

Office européen des brevets

(11) Publication number: **0 458 484 A2**

# EUROPEAN PATENT APPLICATION

(21) Application number: 91304069.7

(51) Int. Cl.⁵: **C09J 7/02**

(22) Date of filing: **07.05.91**

The application is published incomplete as filed (Article 93 (2) EPC). The points in the description or the claim(s) at which the omissions obviously occur have been left blank.

(30) Priority: **07.05.90 US 519698**

(43) Date of publication of application:
**27.11.91 Bulletin 91/48**

(84) Designated Contracting States:
**AT BE CH DE FR GB IT LI NL SE**

(71) Applicant: **THE KENDALL COMPANY**
**15 Hampshire Street**
**Mansfield, Massachusetts 02048 (US)**

(72) Inventor: **Shannon, Paul T.**
**47 Highland Court**
**Needham, Massachusetts 02192 (US)**
Inventor: **Zeitvogel, Frederick J.**
**161 Winter Street**
**Weston, Massachusetts (US)**
Inventor: **Adams, Charles Lee**
**253 Oakridge Lane**
**Franklin, Kentucky (US)**

(74) Representative: **Kearney, Kevin David**
**Nicholas et al**
**KILBURN & STRODE 30 John Street**
**London, WC1N 2DD (GB)**

(54) **Rubber-based adhesive tapes.**

(57)    Novel one-step calendering process wherein two different polymer masses are fed into the same nip to provide discrete molecularly oriented strata ; and
novel sheet materials and adhesive tapes prepared thereby.

EP 0 458 484 A2

The present invention relates to polymeric films and, more particularly, to a cost-effective system for the commercial production of tapes meeting consumer specifications and expectations.

Rubber-based pressure-sensitive adhesive tapes have enjoyed substantial consumer acceptance over a whole line of industrial tapes, as well as for an outer protective wrap for pipelines. They are sold in a wide range of sizes and thicknesses, depending upon the contemplated usage.

In their simplest form, such films comprise a rubber-based pressure-sensitive adhesive formulation carried on a polyolefinic backing for toughness and liquid impermeability. In the line known as duct tapes, a reinforcing cloth material is sandwiched between the adhesive and backing for increased strength and tearability in the cross direction.

As will be readily appreciated, with any article of manufacture, there is always a need and a challenge to cut production costs by lowering the cost of materials and/or labour. With these tapes, the need for lowering production costs is even more acute. This great need is exemplified by the fact that the cost of the polyolefinic backings has skyrocketed in the last few years. In fact, it is Applicant's understanding that the cost of polyethylene, the standard backing material, has increased on the order of 400 per cent over the past few years.

Consequently, in considering means for reducing the production cost of these tapes, attention should logically be focused on the polyethylene backing, while maintaining viable and cost-efficient production line speeds and manufacturing output.

One possibility would of course be to find a less expensive substitute for the polyethylene while still maintaining the same requisite surface characteristics for the tape. To date, no such material has been found.

A second possibility might be to reduce the thickness of the tape backing and thereby use less polyethylene. While this might be possible to a very minor degree without encountering performance problems or customer acceptability, it is not a viable alternative to meaningful cost reduction.

A third possibility would be to mix other less costly materials with the polyethylene in an homogenous blend. However, significant amounts of these other materials cannot be admixed without loss of quality and performance.

Yet another alternative which could be said to be the starting point in conceptual thinking for the present invention would be to form a multilayer backing wherein the outer stratum would be a conventional or prime grade polyethylene and the inner stratum or strata to which the adhesive is to be applied is a less expensive material. Such a material must of course adhere well to the adhesive as well as to the polyethylene top stratum to provide proper structural stability against delamination and thus provide integrity during both shelf life and usage.

Materials of this latter description are known and available. For example, specific mention may be made of the selvedge from the production runs in current manufacturing systems, namely the severed ends of a production roll of tape consisting of backing and adhesive, including the various additives, e.g. tackifiers and fillers for the adhesive, colorants, preservatives, etc. This can be reprocessed to provide a molten mass for tape manufacture. Recycled thermoplastic materials have also become commercially available.

Applicant has considered the possibility of coextruding polyethylene and a less expensive material, e.g. the above-noted selvedge, to form a two-stratum backing onto which the adhesive layer may subsequently be coated in a separate coating step. However, this coextrusion, which requires a separate downstream coating operation to apply the adhesive is not cost-effective from a manufacturing standpoint. Production is too slow and more space, equipment and manpower are required than if the backing was made and the adhesive applied in a single operation. Moreover, as will be discussed in more detail hereinafter, a multilayer backing prepared simply by coextruding onto a moving belt, for example, and then cooling would not provide the desired film characteristics, particularly a substrate for optimum adhesion of the adhesive layer to be applied downstream.

Stated simply, the task of this invention is to devise a system to form a tape of the foregoing description having a backing comprising an outer stratum of thermoplastic material of prime grade and an inner stratum of a less expensive material, which system does not sacrifice quality or speed and efficiency of manufacture.

In accordance with the present invention, the aforementioned task is satisfied by utilising a per se known 3-roll calender under specified operating conditions wherein:

a molten mass of prime grade polyolefin or other thermoplastic material and a molten mass of a lower grade and less costly thermoplastic material are deposited as separate masses at the nip of a first or bottom roll heated to a temperature above the melting point of both of the two masses and a second or middle roll heated to an elevated temperature below the melting point of the masses, the first roll rotating at a speed substantially slower than the second roll, the masses being deposited such that the prime grade polyolefinic mass first contacts the second roll in advance of the nip;

advancing the deposited masses between the nip of the first and second rolls to form discrete strata wherein the inner stratum adhering to the center roll is caused to be the prime polyolefinic mass and the outer stratum is the other or less expensive material, the free outer surface of the outer stratum having a matt finish providing a better substrate for the adhesive to be applied than the smooth outer surface of the prime olefinic stratum; and

further advancing the thus formed two-stratum backing between the nip of the second or middle roll and the third or top roll of the 3-roll calender, the said top roll being heated to a temperature above the melting point of the backing, a mass of adhesive being applied at the nip of the second and third rolls, whereby to be coated on the matt outer surface of the backing.

The use of a 3-roll calender in tape manufacture is old and per se comprises no part of this invention.

For example, U.S.P. 2631954 issued to Bright and assigned to The Kendall Company, assignee of the present invention, describes a system wherein a molten mass of ethenoid polymer, e.g. polyethylene, is deposited at the nip of the first and second rolls of a three roll calender. The first roll, which operates at a substantially slower speed than the second roll, is heated (preferably internally) to a temperature above the melting point of the particular polymer mass employed, e.g. 270°F (132°C) for polyethylene. The second roll is heated (preferably internally) to an elevated temperature below the melting point of the particular polyethylene used, e.g. 190°F (88°C). Since the first roll rotates at a substantially slower speed than the second roll, under the given temperature conditions the mass deposited at the nip will be extruded between the nip of the two rolls to form a layer of substantially uniform thickness conforming to the spacing or gap of the nip, which layer will adhere to the surface of the second roll. The layer is then carried from the surface of the second roll into contact with the third roll rotating at the same speed as the second roll but chilled relative thereto and having a surface temperature of, for example, on the order of 50°F to 70°F (10°C to 21°C). The sheeted layer is stripped from the second roll and passes around the third roll to a takeup roll.

As is stated in the paragraph bridging Columns 3 and 4 of the said USP 2631954, the first roll is preferably rotated at a very low speed sufficient to equalise wear over its entire surface area. The speed of the second roll is then adjusted for satisfactory operation at a greater surface speed. When the speed ratio is maintained in the range of from 5:1 to 30:1, and preferably 15:1, the action at the nip is such that the polymer mass is subjected to a drawing action prior to passage into or during passage through the nip under the frictional influence of the surfaces of the first and second rolls operating at the differential in surface speeds; and this drawing action results in a molecular orientation in the direction of advance prior to the emergence of the material from the nip in its sheet form adherent to the second calender roll, so that the sheet as formed on the second roll exhibits longitudinal molecular orientation.

In Column 4 of USP 2631954 it is stated that the sheet emerging from the nip has different surface characteristics. Its inner surface adherent to the second roll is smooth; while the upper or opposed surface is rougher, having a matt appearance. The difference in surface characteristics is explained in the patent as being the result of the action at the nip. Apparently, the portion of the mass which contacts the second roll in advance of the nip is cooled to form a skin which is carried through the nip at the speed of advance of the second roll. The first roll surface, however, advances at a lesser speed, causing a drag on the material so that the upper surface of the sheet comes off the first roll at a speed greater than the speed of the first roll, with resulting roughness.

As is further taught in the patent, the matt or rougher side possesses highly favourable adhesive-receptive and retentive characteristics for coatings, e.g. solvent-, heat-, or pressure-sensitive adhesives. Consequently, the patent clearly teaches the efficacy of applying an adhesive coating to the rougher or matt surface of a film formed in the aforementioned calendering operation rather than on the opposed smooth surface.

USP 2879547 issued to Morris and also assigned to the present assignee discloses a somewhat similar 3-roll calendering operation for preparing fused film laminates, e.g. pressure-sensitive adhesive tapes. As is described and claimed therein, a thermoplastic material, which, for example, may be polyethylene or a blend of polyethylene and another polymer, is applied in molten form at the nip of the first and second rolls and the resulting film having a matt surface is transported from the second roll to the nip of the third roll where another thermoplastic material, e.g. a pressure-sensitive adhesive introduced at the nip between the second and third rolls is deposited on the matt surface.

From the foregoing discussion, it will be seen that prior to the present invention, it was known in the art for many years that a film or tape backing layer could be provided by applying a single polymeric mass in molten form at the nip of two opposed rolls of a 3-roll calender and advancing the mass between the nip to provide a film adherent to the center roll and which is molecularly oriented in the machine (longitudinal) direction. The film is further characterised as being smooth on the adherent surface and having a rougher or matt finish on the opposed outer surface. It was further known, e.g. from the aforementioned USP 2879547 that this film may then be advanced to the nip of the middle and third roll where an adhesive mass is deposited on the outer surface to provide a tape wherein the adhesive is carried on the adhesive-receptive and retentive rough surface. ·

However, prior to the present invention it was not thought possible to deposit two masses of different polymeric materials at the same nip and maintain the integrity of the deposited masses to obtain discrete molecularly oriented layers of each. Rather, those at the assignee's manufacturing facility extremely knowledgeable in 3-roll calenders, such as those employed in-house in tape manufacture, believed the two masses would blend together to form a single layer containing both mixes, the thickness of which would of course be determined by the gap between the respective rolls.

In accordance with the present invention, it has been unexpectedly discovered that, contrary to the negative teachings and prejudices of those skilled in the art, it is in fact possible, by following the operating conditions detailed hereinafter, to prepare a multistratum backing sheet material in such a calendering operation wherein the outer stratum comprises a prime grade thermoplastic material such as the polyolefins traditionally employed today in tape manufacture, the free outer surface of which is smooth so as to provide a uniform surface morphology for the adhesive layer of the tape to adhere to as the tape is spirally wound or otherwise overlapped over the substrate to be taped; and the inner stratum is present as a discrete layer of less costly polymeric material laminated to the outer stratum, the free outer surface of the inner stratum being roughened or of a matt appearance, as heretofore discussed, so as to provide the optimum surface characteristics for both receiving the adhesive coating and subsequent retention of the thus applied adhesive layer and thereby inhibit the danger of delamination of the backing and the adhesive.

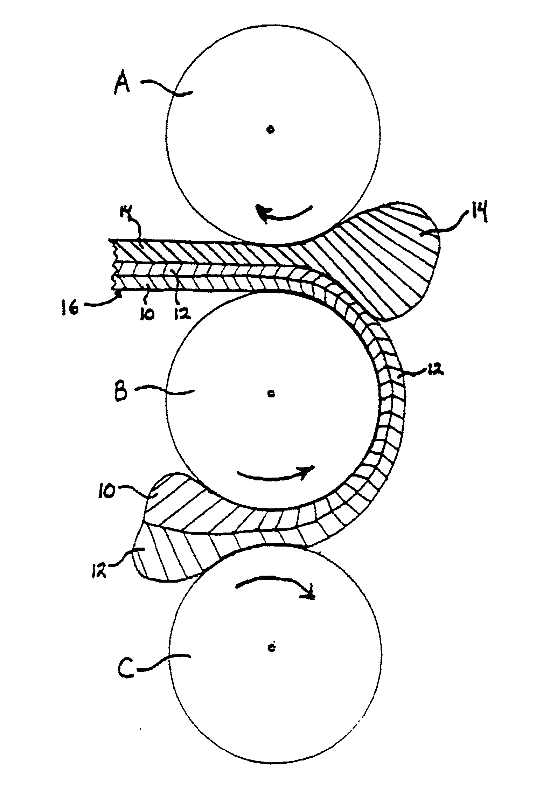

The invention may be put into practice in various ways and one specific embodiment will be described to illustrate the invention with reference to the accompanying drawing taken in conjunction with the following detailed description.

The figure is a schematic view illustrating the manufacturing process of this invention with the thicknesses of the tape materials greatly exaggerated with respect to the dimensions of the rolls for purposes of clear illustration of the invention.

As shown schematically therein, a molten mass of prime grade polyolefin 10 and a lesser grade and less expensive molten mass containing polyolefinic material 12 are separately deposited at the nip of adjacent rolls B and C of a conventional 3-roll calender whose respective surface temperatures and speeds of rotation may be individually controlled.

The prime grade olefinic material may comprise any of the polyolefins or mixtures thereof heretofore employed in tape manufacture, e.g. polyethylene, polypropylene, polyisobutylene, etc., polyethylene being preferred, as was heretofore indicated. By way of further illustration, a blend of low density polyethylene (LDPE) and high density polyethylene (HDPE) has been found to be particularly suitable for the manufacture of the industrial and/or pipeline tapes herein contemplated.

The second molten mass may in theory comprise any thermoplastic mix which will bond well to both the adhesive layer and the overlying polyolefinic layer. Conceptually, it could be more expensive than the polyolefin, in which case it should of course provide some function superior to those of the polyolefin to justify its use. Accordingly, the use of such other mixes is to be understood to be within the scope of this invention. However, as heretofore mentioned, to accomplish the stated task of this invention, the other mix will comprise a lower grade polyolefinic blend, i.e. a mixture of polyolefin, such as the polyolefin in the prime grade stratum, and other ingredients making the mix less expensive than the prime grade. Included in the list of such expensive blends, mention may be made of polyolefin mixes which fall in the categories of reclaim or selvedge.

With respect to the former, it sometimes happens that an entire production run, e.g. an elongated tape which prior to slitting to smaller rolls may, for example, be on the order of 36" (91 cms) wide and perhaps 50 or 90' (15.2 or 27.4 metres) in length, fails a quality control test for one reason or the other. Since such a roll would consist of backing, adhesive components and other additives, it might normally be relegated to the scrap heap and discarded. In accordance with this invention, at least a portion of such a reclaim may be admixed with a prime grade polyolefin to provide the inner stratum to which the adhesive is to be applied.

Selvedge, in the context that this term is used in the present case, is in a sense equivalent to the above-noted reclaim. In the typical manufacturing process, a production roll is first made which, as noted above, may be 36" (91 cms) wide or of substantially greater or lesser width. In the manufacture, the backing is made somewhat greater in width than the adhesive, leaving an area on both edges of the backing where there is no adhesive, in order to prevent any adhesive overrun. After the roll is made and cooled, the excess backing on either side is severed and the pure backing material may then be recycled for use in the prime layer. The resulting tape is then slit into desired widths with the outer edges slit cleanly to provide the end sections which are neat and attractive when wound on a roll for sale. That portion which is slit off, containing both backing and tape, and which may, for example, be on the order of 1-2" (2.5 to 5.1 cms) in width is the selvage which is contemplated by this invention.

For purposes of simplicity of definition, as used herein and in the appended claims, the term "reclaimed rubber-based adhesive tape" shall mean the tape previously made, including both the polyolefin backing layer and the rubber-based adhesive carried thereon, which has been reheated above its melting point and the resulting molten mass in whole or in part used as the less expensive material. [In this context, it can often be said that the "less expensive" material has a zero cost, since it may well have had no use and been discarded prior to the present invention.]

A critical feature to the unexpected results of this invention in maintaining the integrity of the two components to provide discrete strata defining the backing sheet material is the necessity for the polyolefinic prime material 10 being extruded such that a continuous mass of the material contacts the center roll B first and in advance of the nip. If this does not occur, mixing of the masses 10 and 12 occurs and one does not obtain discrete molecularly oriented strata with the prime mass 10 adhering to the center roll B and the free outer surface of mass 12 being characterised as having a matt or roughened finish.

In the preferred embodiment, the respective masses 10 and 12 are coextruded. Suitable coextrusion apparatus for this purpose, e.g. a so-called coathanger die with a multilayer feedblock, are well known in the art and per se comprise no part of this invention. As will be well understood by those skilled in the art, irrespective of the particular coextrusion device employed, the barrel temperature of the extruder will be well above the melting point of the extrudates, e.g. of the order of 300-500°F (149 to 200°C), and the operating temperature will be maintained so that the extrudate enters the nip between rolls B, C above its melting point.

It is also essential to the practice of this invention that the temperature and speed of rotation of rolls B and C be within specified parameters.

Specifically, with respect to temperature, the surface of center roll B should desirably be heated to an elevated temperature below the melting point of masses 10, 12. Temperatures of the order of from about 160 to about 190°F (88°C) are particularly preferred. The surface of roll C should desirably be heated to a temperature above the melting point of the masses, temperatures of the order of from about 350 (177°C) to about 500°F (260°c) being particularly preferred.

With respect to the speed of rotation, the bottom roll C should rotate slower and desirably substantially slower than the center roll B.

Preferably, the ratio of speed of B:C should be from 1000:1 to 5:4. For example, the center roll B may be set to rotate at speeds (calculated in terms of output) of 5-100 yards per minutes (YPM) (         to metres per minute) and bottom roll C may be set to rotate at a speed as low as 0.1 YPM (        metres per minute) to as much as of the order of 80% of the speed of center roll B.

With reference again to the drawing, when operated within the above-noted parameters, the polymeric masses 10, 12 advance from the nip of the rolls B, C as discrete layers with the prime olefinic layer 10 adherent to the center roll B. The resulting laminate of the layers 10, 12 then advance through the nip of the roll A, maintained at a temperature above the melting point of the layers, e.g. a temperature of the order of that provided for roll C, where a mass of molten pressure-sensitive adhesive 14 is deposited on the matt outer surface of the layer 12. The resulting tape then passes through the nip and it is then carried through cooling baths and then taken up on a roll to provide an elongated roll of tape which may then be subjected to the conventional longitudinal slitting process and cutting across the width to provide a series of rolls of the desired width and length, all in the per se known manner.

With respect to the speed of rotation of roll A, one skilled in the calendering art will understand that since the center roll B is the drive force determining line speed, roll A should not normally rotate faster than roll B. Other than that, the speed of rotation of roll A is not material to the practice of this invention and may, for example, be of the order of about 1.0 YPM (        metres per minute).

The particular adhesive to be coated in the calendering process of this invention will be a matter of choice within the expected judgment of the skilled worker, depending upon the properties desired and contemplated usage.

A wide range of thermoplastic adhesive formulations which may be calendered are well known in the art. Preferred are the commonly used rubber-based pressure sensitive adhesives. Such adhesives will typically comprise at least one rubbery elastomer (polymer having rubber-like properties) and at least one tackifying resin as well as other additives performing specific desired functions, e.g. a colorant, such as carbon black or titanium dioxide, fillers, antioxidants, and other suitable elastomers include natural rubber, cyclised rubber, styrene-butadiene copolyer (SBR), acrylonitrile-butadiene copolymer (NBR), chlorinated rubber, polychloroprene (neoprene), rubber hydrochloride, polysulfide rubber, carboxylic elastomers, silicone rubber, polyurethane rubber, acrylonitrile-butadiene-styrene (ABS), reclaimed rubber, butyl rubber, polyisoprene, polyisobutylene, ethylene-propylene-diene monomer terpolymer rubber (EPDM), and the "KRATON" (trademark of Shell Chemical) family of rubbery polymers.

The thicknesses of the respective gaps between the rollers and in turn the thicknesses of the backing and adhesive layer formed in the practice of this invention will vary as desired like tapes previously prepared.

The following example describes an embodiment of the invention and further illustrates the invention without limitation thereof.

5

EP 0 458 484 A2

## EXAMPLE

A 3-roll mill such as previously described equipped with internal heating means was set for the following operating conditions:

| ROLL | TEMPERATURE | SPEED | | |
|------|-------------|-------|---|---|
| Top Roll A | 350°F (177°C) | 1 | YPM | MPM |
| Center Roll B | 183°F ( 84°C) | 10 | YMP | MPM |
| Bottom Roll C | 364°F (184°C) | 0.5 | YMP | MPM |

The gap between the bottom and center rolls for the backing was set at about 20 mils (      mms) and the gap between the center and top rolls for the adhesive layer was set at about 25 mils (      mms) to prepare a tape on the order of 25 mils (      mms) total thickness.

A blend of 52% LDPE (m.pt. 115°C), 40% HDPE (m.pt. 135°C), 7% white concentrate and 1% antioxidant (prime polyolefinic component); and a blend of 40% HDPE (m.pt. 135°C), 25% LDPE (m.pt. 115°C) and 35% slitter selvedge, as heretofore explained, was prepared for the less expensive layer.

A standard rubber-based pressure-sensitive adhesive mix comprising about 1/3 butyl rubber; 1/3 tackifier; and 1/3 clay filler was used to prepare the adhesive layer.

A coathanger coextrusion die with multilayer feedblock set at an internal temperature of about 450°F (232°C) was used to coextrude the prime and less expensive backing blends between the rolls B and C such that the prime blend contacted the roll B first before the nip. When the extruded masses passed through the nip, two substantially equal layers were formed, about 10 mils (      mms) each, with the prime layer adherent to the roll B and the other, having the expected matt outer surface adherent to the roll C. As the two layers passed through the nip, the outer less expensive layer was stripped from the roll C and the resulting laminate was carried to the nip between the rolls A and B where the adhesive mass extruded at this point was deposited on the matt outer surface of the two-stratum backing. When the adhesive-containing backing sheet passed through the nip, an adhesive layer about 5 mils (      mms) thick was carried thereon.

The resulting elongated roll of tape may then be slit to desired widths and cut into desired lengths in per se known manner.

In the foregoing illustrative example, it will be observed that the less expensive mass coextruded to form the stratum 12 comprised a mixture of 65% prime material and 35% selvedge. In this example, approx. 17.5% by weight reduction in prime material was obtained to make the 20 mil (      mms) thick backing sheet.

Although in the foregoing example only a portion of the prime material was replaced, it is to be expressly understood that the present invention contemplates replacement of all or a part of the prime polyolefin in the stratum 12 with a less expensive polymer mix.

While the invention has been described in detail in the foregoing description in terms of the solution to the task of the invention, namely a more cost-effective manufacturing process wherein a portion of the polyolefin material typically used to form the backing sheet has been replaced with a less expensive material, it is further to be understood that the invention is not limited thereto.

In this context, it will be seen that the present invention provides a one-step calendering procedure wherein two different polymer masses are fed into the same nip to provide discrete strata. It is therefore clear that cost is not a criteria to practising the spirit of the invention taught in the foregoing description and that any two compatible polymeric mixes may be employed.

As used herein and in the appended claims, the term "compatible" means polymeric mixes which will not adversely interact and which will bond tightly to one another to form a useful laminar structure. In like manner, it is visualised that the polymer mix 14 need not be a pressure-sensitive adhesive or, for that matter, an adhesive at all. It may be another thermoplastic material without adhesive properties to form a 3-stratum sheet material in which the opposed outer surfaces may exhibit the same or different chemical and/or physical properties.

In the foregoing description, reference has been made throughout to the use of polyolefins. While polyolefins are indeed the preferred materials for tape backings, it will be appreciated that the invention in its broadest aspect is not limited thereto. Other thermoplastic materials which may be utilised in the practice of this invention will be readily suggested to those skilled in the art in the light of the foregoing description.

Since certain changes may be made without departing from the scope of the invention herein described, it is intended that all matter contained in the foregoing description, including the Drawing and Example shall

6

be interpreted as illustrative and not be taken in a limiting sense.

In its broadest aspects the invention extends to an adhesive tape comprising an adhesive layer carried on one surface of a multistratum sheet material, the outer stratum consisting essentially of a prime grade polyolefinic material, the inner stratum being less costly and containing a polyolefinic material, the outer surface of said outer stratum being characterised as being substantially smooth, the opposed outer surface of said inner stratum carrying said adhesive layer being characterised as being roughened and as being more adhesive-receptive and adhesive-retentive than said smooth outer surface of said sheet material. Preferably both the said polyolefins comprise polyethylene. The said polyethylene in said inner stratum may be contained in a selvedge mix. The said adhesive layer may be a rubber-based pressure-sensitive adhesive formulation.

The invention also extends in another aspect to a process for preparing multistratum sheet materials from first and second different thermoplastic polymeric masses comprising the steps of:

(1) providing a calender having first and second superposed rolls with a gap therebetween defining the thickness of a sheet material manufactured thereon;

(2) adjusting the temperature of said first roll to a temperature above the melting point of each said mass and the temperature of said second roll to an elevated temperature below the melting point of each said mass;

(3) adjusting the speed of rotation of said first and second rolls such that said first roll rotates substantially slower than said second roll;

(4) depositing said first and second masses in molten form adjacent the nip of said rolls, said first mass being deposited by extrusion such that it contacts said second roll first and in advance of the nip between said rolls;

(5) advancing said deposited masses between said rolls wherein said first mass is adherent to said second roll and said second mass to said first roll whereby to form said multistratum sheet consisting of discrete strata molecularly oriented in the machine direction; and

(6) continuing the advance of said sheet to strip said second mass from said first roll

The said first polymeric mass preferably consists essentially of a prime commercial grade polyolefin, e.g. at least one polyethylene, which may be a mixture of high and low density polyethylene.

The said masses are preferably coextruded adjacent the nip of said first and center rolls. The said second mass is desirably of lower cost than said first mass. The said second mass may include a selvage polyolefin mix.

The surface of said first stratum of said sheet adherent to said second roll is preferably characterised as being essentially smooth and the outer surface of said second stratum stripped from said first roll is preferably characterised as being roughened and as being adhesive-receptive.

The invention also extends to a multistratum sheet material prepared by the process of the invention. The surface of said second roll is preferably at a temperature of from about 160 to about 190°F and the surface temperature of said first roll is preferably from about 350 to about 500°F.

The ratio of speed of rotation of said second roll to said slower rotating first roll is preferably from about 1000:1 to about 5:4. The said center roll preferably rotates at a speed, in terms of output, of from about 5 to about 100 yards per minute and said first roll preferably rotates at from about 0.1 yards per minutes to as much as 80 percent of the speed of said center roll.

The invention also preferably extends to a process which includes the steps of:

(7) further advancing said sheet material carried on said second roll to the nip of a third roll in superposition with said second roll, said third roll having a surface temperature above the melting point of said sheet material;

(8) coating a third thermoplastic mass onto the free outer surface of said multistratum sheet material at the nip between said second and third rolls, said third thermoplastic mass having a melting point below the temperature of said third roll; and

(9) passing said sheet material coated with said third mass through the nip of said second and third rolls.

The third mass is preferably an adhesive, e.g. a pressure-sensitive rubber-based adhesive.

The invention also extends to a three layer adhesive tape as prepared by the process of the invention.

The invention further extends to a process for preparing an adhesive tape comprising an adhesive layer carried on a surface of a multi-stratum sheet material consisting of discrete strata molecularly orientated in the machine direction, the outer stratum of said sheet material consisting essentially of a prime commercial grade polyolefinic material, the inner stratum comprising a polyolefin and being of a less costly grade, the outer surface of said first stratum being characterised as essentially smooth, the outer surface of said inner stratum carrying said adhesive layer being characterised as being roughened, adhesive-receptive and adhesive-retentive, said process comprising the steps of:

(1) providing a 3-roll calender having first, center and third rolls, said first and center rolls and said center

7

and third rolls being in superposition with gaps between superposed rolls defining the thickness of said tape;

(2) adjusting the surface temperature of each said roll wherein said first and third rolls are at a temperature above the melting point of the materials for forming said strata of said sheet material, and said center roll is at an elevated temperature below the melting point of said materials;

(3) adjusting the speed of rotation of said rolls such that said first roll rotates substantially slower than said center roll and the speed of rotation of said third roll is not greater than the speed of rotation of said center roll;

(4) depositing a first molten mass of said polyolefin material for forming said outer stratum and a second molten mass of said polyolefin-containing material for forming said inner stratum adjacent the nip of said first and center rolls, said first molten mass being deposited by extrusion such that it contacts said center roll first and in advance of the nip between said first and center rolls;

(5) advancing said deposited masses between said first and second rolls wherein said first mass is adherent to said center roll and said second mass is adherent to said first roll, said adhered masses being present as discrete strata whereby to form said multistratum sheet material having said smooth surface adherent to said center roll;

(6) continuing the advance of said sheet material to strip said second stratum from said first roll, the outer surface of said stripped second stratum being characterised as roughened and as being adhesive-receptive and adhesive-retentive;

(7) further advancing said sheet material carried by said center roll to the nip of said center and third rolls;

(8) depositing a mass of molten thermoplastic adhesive at the nip of said center and third rolls on the roughened surface of said sheet material; and

(9) advancing said adhesive-coated sheet material between said center and third rolls to form said tape.

The said first and second mass preferably consists essentially of polyethylene. The said second mass preferably includes a selvage polyethylene mix.

The surface of said center roll is preferably at a temperature of from about 160 to about 190°F and the surface temperature of said first and third rolls is preferably from about 350 to about 500°F.

The ratio of speed of rotation of said center roll to said slower rotating first roll is preferably about 1000:1 to about 5:4. The said center roll preferably rotates at a speed, in terms of output, of from about 5 to about 100 yards per minute and said first roll preferably rotates at from about 0.1 yard per minute to as much as 80 percent of the speed of said center roll.

The said adhesive preferably comprises a rubber-based pressure-sensitive adhesive.

## Claims

1. An adhesive tape comprising an adhesive layer carried on one surface of a multistratum sheet material, the outer stratum consisting essentially of a prime grade polyolefinic material, the inner stratum being less costly and containing a polyolefinic material, the outer surface of the said outer stratum being characterised as being substantially smooth, the opposed outer surface of the said inner stratum carrying the said adhesive layer being characterised as being roughened and as being more adhesive-receptive and adhesive-retentive than the said smooth outer surface of the said sheet material.

2. A tape as claimed in Claim 1 characterised in that the said polyolefins comprise polyethylene.

3. A process as claimed in Claim 2 characterised in that the said polyelefin comprises a mixture of high and low density polyethylene.

4. A tape as claimed in Claim 1 or Claim 2 characterised in that the said polyothylene in the said inner stratum is contained in a selvedge mix.

5. A tape as claimed in Claim 1, 2, 3 or 4 characterised in that the said adhesive layer is a rubber-based pressure-sensitive adhesive formulation.

6. A process for preparing multistratum sheet materials from first and second different thermoplastic polymeric masses comprising the steps of:

(1) providing a calendar having first and second superposed rolls with a gap therebetween defining the thickness of a sheet material manufactured thereon;

(2) adjusting the temperature of the said first roll to a temperature above the melting point of each said mass and the temperature of the said second roll to an elevated temperature below the melting point of each said mass;

(3) adjusting the speed of rotation of the said first and second rolls such that the said first roll rotates slower than the said second roll;

(4) feeding the said first and second masses at temperatures above their melting points in to the nip of the said rolls, the said first mass being feed, e.g. deposited by extrusion, such that it contacts the said second roll in advance of the nip between the said rolls and before the second mass contacts the second roll;

(5) advancing the said masses between the said rolls wherein the said first mass contacts the said second roll and the said second mass the said first roll whereby to form the said multistratum sheet consisting of discrete strata molecularly oriented in the machine direction; and

(6) continuing the advance of the said sheet to strip the second mass from the said first roll.

7. A process as claimed in Claim 6 characterised in that it includes the steps of :

(7) further advancing the said sheet material carried on the said second roll to the nip of a third roll in superposition with the said second roll, the said third roll having a surface temperature above the melting point of the said sheet material;

(8) coating a third thermoplastic mass onto the free outer surface of the said multistratum sheet material at the nip between the said second and third rolls, the said third thermoplastic mass having a melting point below the temperature of the said third roll; and

(9) passing the said sheet material coated with the said third mass through the nip of the said second and third rolls.

8. A process for preparing an adhesive tape comprising an adhesive layer carried on a surface of a multistratum sheet material consisting of discrete strata molecularly oriented in the machine direction, the outer stratum of said sheet material consisting essentially of a prime commercial grade polyolefinic material, the inner stratum comprising a polyolefin and being of a less costly grade, the outer surface of said first stratum being characterised as essentially smooth, the outer surface of said inner stratum carrying said adhesive layer being characterised as being roughened, adhesive-receptive and adhesive-retentive, said process comprising the steps of :

(1) providing a 3-roll calendar having first, center and third rolls, said first and center rolls and said center and third rolls being in superposition with gaps between superposed rolls defining the thickness of said tape;

(2) adjusting the surface temperature of each said roll wherein said first and third rolls are at a temperature above the melting point of the materials for forming said strata of sheet material, and said center roll is at an elevated temperature below the melting point of said materials;

(3) adjusting the speed of rotation of said rolls such that said first roll rotates substantially slower than said center roll and the speed of rotation of said third roll is no greater than the speed of rotation of said center roll;

(4) depositing a first molten mass of said polyolefin material for forming said outer stratum and a second molten mass of said polyolefin-containing material for forming said inner stratum adjacent the nip of said first and center rolls, said first molten mass being deposited by extrusion such that it contacts said center roll first and in advance of the nip between said first and center rolls;

(5) advancing said deposited masses between said first and second rolls wherein said first mass is adherent to said center roll and said second mass is adherent to said first roll, said adhered masses being present as discrete strata whereby to form said multistratum sheet material having said smooth surface adherent to said center roll;

(6) continuing the advance of said sheet material to strip said second stratum from said first roll, the outer surface of said stripped second stratum being characterised as roughened and as being adhesive-receptive and adhesive-retentive;

(7) further advancing said sheet material carried by said center roll to the nip of said center and third rolls;

(8) depositing a mass of molten thermoplastic adhesive at the nip of said center and third rolls on the roughened surface of said sheet material and;

(9) advancing said adhesive-coated sheet material between said center and third rolls to form said tape.

9. A process as claimed in anyone of Claims 6 to 8 characterised in that the said masses are coextruded adja-

9

cent the nip of said first and center rolls.

10. A process as claimed in anyone of Claims 6 to 9 characterised in that the surface of the said second roll is at a temperature of from about 160 (    °C) to about 190°F (    °C) and the surface temperature of the said first roll is from about 350 (    °C) to about 500°F (    °C).

11. A process as claimed in anyone of Claims 6 to 10 characterised in that the ratio of the speed of rotation of the said second roll to the said slower rotating first roll is from about 1000:1 to about 5:4.

12. A process as claimed in anyone of Claims 6 to 11 characterised in that the said center roll rotates at a speed, in terms of output, of from about 5 to about 100 yards per minutes (about    to about metres per minute) and the said first roll rotates at from about 0.1 yards per minute (about    to about metres per minute) to as much as 80 percent of the speed of the said center roll.